# EUROPEAN PATENT APPLICATION

(11) **EP 3 402 311 A1**
(43) Date of publication of application: **14.11.2018**
(21) Application number: 17170733.4
(22) Date of filing: 11.05.2017
(51) Int. Cl.: H05B 6/12

(54) **INDUCTION COOKING HEATER AND COOKTOP COMPRISING SUCH HEATER**

(71) Applicant: Whirlpool Corporation, Benton Harbor, MI 49022 (US)
(72) Inventor: Chinazzo, Fabiano, 21025 Comerio (IT)
(74) Representative: Spina, Alessandro

(57) **Abstract**

An induction cooking heater comprises one inductor supported by a polymeric flat element on which the inductor is wound and a plate on which said element is mounted, the element presenting projecting portions which are configured to be shape-locked and/or force-locked at corresponding portions of the plate.

## Description

The present invention relates to an induction cooking heater comprising at least one inductor supported by a polymeric element on which the inductor is wound and a plate on which such element is mounted.

An example of such flat polymeric element is disclosed by CN 201887971 U.

The inductor, in the known form of an induction coil comprising a plurality of wires, is an element of the induction cooktop which has to interact mechanically with the overall structure of the cooktop. In particular, it needs a separator for its electrical insulation with respect to the glass below which it is mounted and a support usually made of aluminum.

The actual electrical insulation layer between the induction coil and the cooktop glass is obtained using a spacer, a mineral wool or a mica sheet. A typical solution adopted to join the two elements is to use high temperature glue.

There are several ways to join the inductor to the aluminum support: if a plastic support element is not used, the only available solution is to use high temperature glue. Instead, if the coil presents a support structure, the connection is usually done by using fastening screws or by creating a metal tab that is closed during assembly. A known fastening solution is disclosed by EP1335632, where a complex system for adjusting the position of the inductor support is shown. All the known solutions have a significant impact on the production assembling timings.

It is therefore an object of the present invention to provide an induction cooking heater which does not present the above drawbacks and which provides a fast fixing method easy to be managed inside the factory.

Such object is reached thanks to the features listed in the appended claims.

By providing the polymeric element supporting each inductor with a plurality of projecting portions configured to be shape-locked and/or force-locked at corresponding portions of the plate, either the electrical insulation plate or the metal support plate, it is possible to easily assemble the cooktop in a fully automated way.

According to a first embodiment of the invention, each of the projecting portions comprises a stem with a plurality of barb-like flexible pieces branching from an end of the stem and configured to cooperate with a corresponding hole of the plate for fastening the polymeric element thereto. The polymeric element is fastened to the plate by simply snap-engaging the stems into corresponding holes in the plate.

According to a second embodiment of the invention, each projecting portion comprises an L-shaped fastening integral piece configured to cooperate, by translation or by rotation of the polymeric element, with corresponding slots in the plate. In this case it is only necessary to insert the L-shaped fastening pieces into the corresponding slots and move the polymeric element so that a corresponding portion of the plate is serrated by the L-shaped piece which acts as a jaw.

Further advantages and features of an induction cooking heater according to the present invention will become clear from the following detailed description, with reference to the attached drawings in which:
- Figures 1-3 are partial section views of an inductor polymeric support according to a first embodiment of the invention which cooperates, in three sequential steps, with an insulation plate for a fastening thereto;
- Figures 4-6 are partial section views similar to figures 1-3 and relate to sequential steps of fixing the inductor polymeric support to a metal plate;
- Figure 7 is a partial bottom view of a metal plate to which the inductor polymeric support of figures 1 to 3 is mounted;
- Figures 8-10 are partial section views of an inductor polymeric support according to a second embodiment of the invention which cooperates, in three sequential steps, with a metal plate for a fastening thereto; and
- Figure 11 is a top view of the metal plate of figures 8-10.

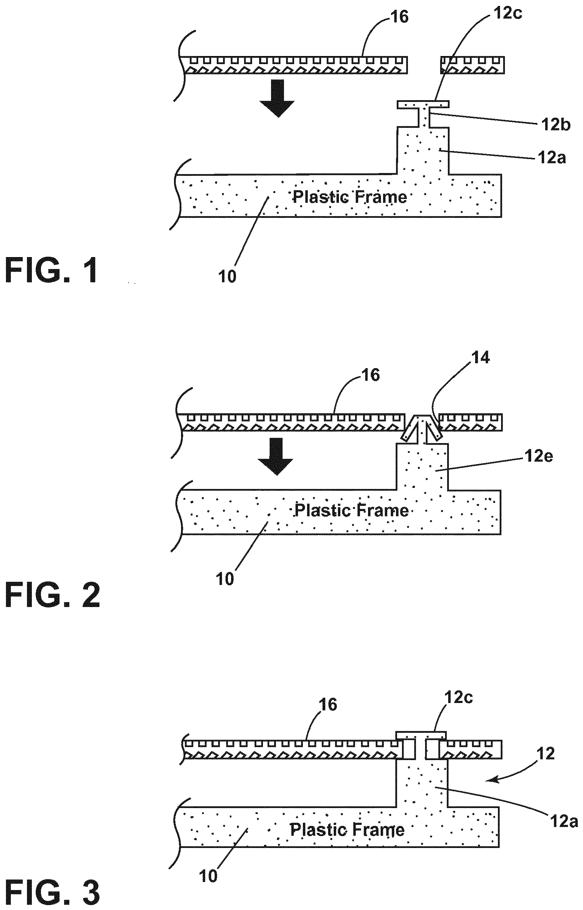

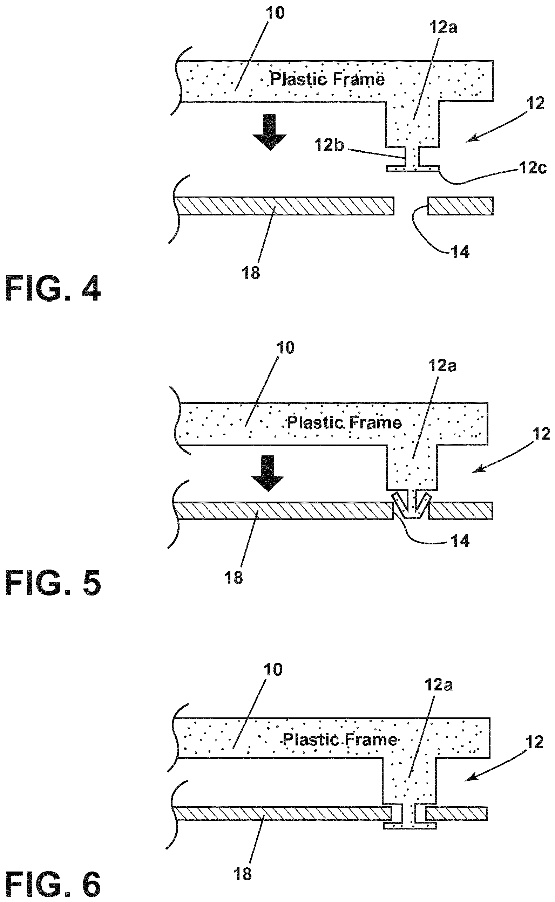

With reference to the drawings, a plastic disc 10 is used to support a wound coil of an inductor (not shown). The support 10, which may have different shapes (for instance an oval shape), presents a plurality of stems 12 which may protrude from the same side of the support 10 where the coil is mounted (as in figures 1 to 3) or from the other side of the support 10 (as in figures 4 to 6) or from both sides (not shown in the drawings).

In all the above cases each stem 12 presents a base portion 12a and an end portion 12b which has a diameter lower that the base portion 12a and presents a plurality of barb-like radial pieces 12c branching from the end portion 12b and configured to snap fix the stems 12 in corresponding holes 14 of a mica sheet 16 or of a aluminum plate 18. The polymeric material of the support 10 allows the radial pieces 12c of each stem 12 to be sufficiently elastic for snap-engagement, as clearly shown in figures 2 and 5. After the radial pieces 12c have snapped inside the hole 14 and have opened crosswise with reference to the inserting direction, the mica sheet and/or the metal plate are fixed to the coil and this prevents any accidental removal.

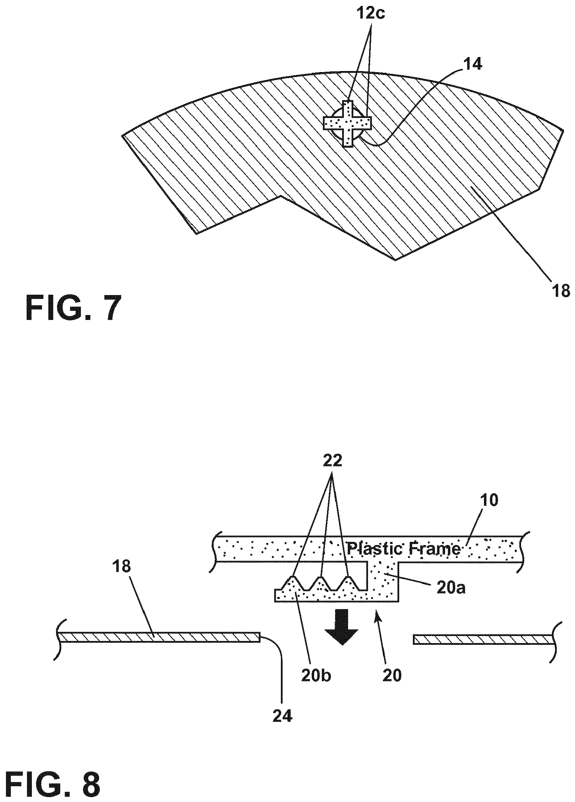

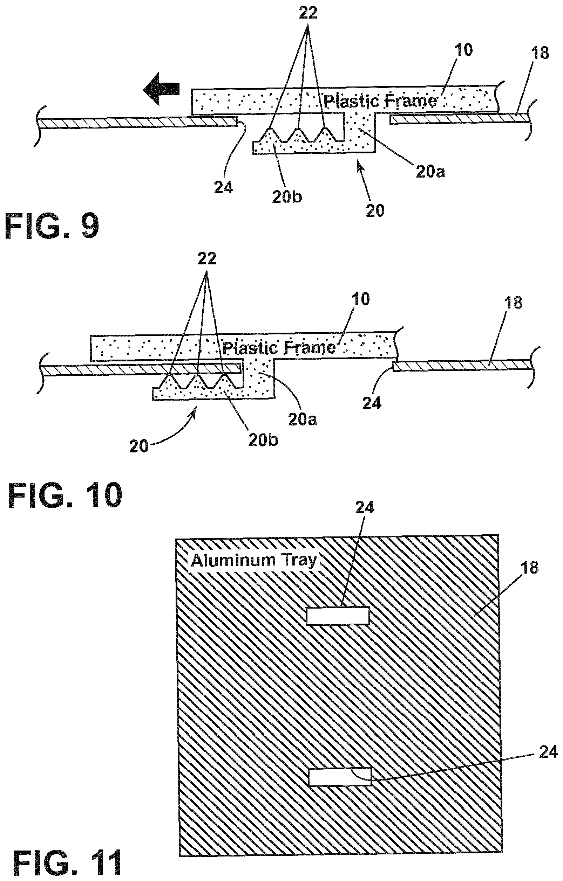

With reference to the second embodiment shown in figures 8-11, the solution consists in the adoption of a special fixing L-shaped device 20 integral with the support disc 10 and having a plurality of fixing teeth 22. In detail, each L-shaped device 20 presents a first portion 20a orthogonal with the disc 10 and a second portion 20b parallel to the disc 10 and on which said teeth 22 are provided. The distance between the second portion 20b and the disc 10 is such that the fixing device 20 is force locked on the plate 18 adjacent a zone where an insertion slot 24 have been provided. The slot 24 in the aluminum tray 18 has a dimension slightly greater than the L-shaped device 20. During a first phase of the assembly (figures 8 and 9), operator or robot has to insert this device 20 inside the slot 24 until the base of the disc 10 reaches the level set by the aluminum tray 18.

During a second phase of the assembly procedure (figures 9 and 10), with a circular or with a translation movement, the coil plastic frame 10 joins with the aluminum tray 18 in a very fixed mode. The particular shape of the set of teeth 22 will block in a better way the coil support avoiding the effect of mechanical vibrations that happen during cooktop transportation and/or during use of the induction cooking heater.

The dimensions are designed in order to have a good degree of blocking strength necessary to avoid the accidental detachment between induction coil and aluminum tray but at the same time it's permitted the possibility to extract the support in case of wrong assembling.

Both the above solutions improve the factory manufacturability because they generate a fast, reliable and safe fixing.

The disc 10 has preferably circular/spiral grooves (not shown) for inserting the metal wired forming the wound inductor. Any polymeric material can be used for the disc 10, either thermoplastic resin or thermosetting resin. In order to increase the mechanical and thermal resistance of the disc 10, the polymeric material may include reinforcing material as fibers or the like.

## Claims

1. Induction cooking heater comprising at least one inductor supported by a polymeric element (10) on which the inductor is wound and a plate (16, 18) on which said element (10) is mounted, **characterized in that** the element (10) presents projecting portions (12, 20) which are configured to be shape-locked and/or force-locked at corresponding portions (14) of the plate (16, 18).

2. Induction cooking heater according to claim 1, wherein the polymeric element (10) is substantially flat.

3. Induction cooking heater according to claim 1 or 2, wherein each of said projecting portions (12) comprises a stem (12) with a plurality of barb-like flexible pieces (12c) branching from an end (12b) of the stem (12) and configured to cooperate with a corresponding hole (14) of the plate (16, 18) for fastening the polymeric element (10) thereto.

4. Induction cooking heater according to claim 1 or 2, wherein each of said projecting portions comprises a L-shaped fastening piece (20) which presents a first part (20a) substantially orthogonal to the polymeric element (10) and a second part (20b) substantially parallel to said element (10) and configured to cooperate with a corresponding slot (24) of the plate (16, 18) for fastening the flat polymeric element (10) through a translation or rotation movement thereof.

5. Induction cooking heater according to claim 4, wherein the second part (20b) of the L-shaped fastening piece (20) presents a plurality of teeth (22) configured to contact a surface of the plate (16, 18) in order to avoid a relative movement between the polymeric element (10) and the plate (16, 18)

6. Induction cooking heater according to any of the preceding claims, wherein the plate is a mica sheet (16).

7. Induction cooking heater according to any of claims 1 to 5, wherein the plate is a metal plate (18)

8. Induction cooking heater according to any of the preceding claims, wherein the polymeric element is shaped as a disc (10).

9. Induction cooking heater according to any of claims 1 to 7, wherein the polymeric element has an oval shape.

10. Induction cooking heater according to any of the preceding claims, wherein the polymeric element (10) presents grooves for inductor fixing.

11. Induction cooktop comprising an induction cooking heater according to any of the preceding claims.
